# EUROPEAN PATENT APPLICATION

(11) **EP 4 651 053 A1**
(43) Date of publication of application: **19.11.2025**
(21) Application number: 25176113.6
(22) Date of filing: 13.05.2025
(51) Int. Cl.: G06Q 10/20, G06F 16/28

(54) **SYSTEM AND METHOD FOR CLASSIFYING MAINTENANCE ISSUES FOR AIRCRAFT**

(30) Priority: 16.05.2024 US 202463648220 P; 21.02.2025 US 202519059463
(71) Applicant: The Boeing Company, Arlington, VA 22202 (US)
(72) Inventor: BELLEMARE-DAVIS, Alexander, ARLINGTON, 22202 (US); LANGILLE, Anni Sarah, ARLINGTON, 22202 (US); PARSA, Soheil Seyyedi, ARLINGTON, 22202 (US); TAGARIAN, Sara, ARLINGTON, 22202 (US); FAUST, Jacob E., ARLINGTON, 22202 (US)
(74) Representative: Plasseraud IP

(57) **Abstract**

A system and a method include a user interface including a display and an input device. The input device is configured for selection of one or more seed records regarding one or more maintenance issues of one or more vehicles. The user interface is further configured to output one or more first electronic signals that include the one or more seed records. A records database includes maintenance records for the one or more vehicles. A similarity engine control unit is in communication with the user interface and the records database. The similarity engine control unit is configured to receive the one or more first electronic signals including the one or more seed records, search the maintenance records within the records database, and find one or more return records including a subset of the maintenance records that are similar to the one or more seed records.

## Description

### FIELD OF THE DISCLOSURE

Examples of the present disclosure generally relate to systems and methods for classifying maintenance issues for aircraft.

### BACKGROUND OF THE DISCLOSURE

Aircraft are used to transport passengers and cargo between various locations. Numerous aircraft depart from and arrive at a typical airport every day.

Various aircraft within a fleet typically undergo periodic maintenance procedures. As can be appreciated, large commercial aircraft include numerous systems, components, devices, and the like that require periodic maintenance. Maintenance crews often search maintenance records of numerous aircraft to determine potential maintenance issues.

A known method for searching maintenance records (particularly in military organizations) includes reliance on categorical codes embedded in the maintenance records. However, such method may not be helpful if an area of interest does not fall neatly into a category, or if a category accommodates multiple issues. Further, at least some of the maintenance records may include at least one significant coding error that substantively alters the meaning of a maintenance record.

Due to such limitations, and knowing that written narratives of maintenance records ultimately represent intentions of mechanics, for example, certain known methods were developed that enable keyword searches. However, for many issues, keyword searches need to be able to accommodate a multitude of keywords, synonyms, acronyms, alternate spellings, and misspellings to be effective (for example, terms such as handset, handmike, PA system, intercom, interphone, FA PA, F/A P/A, etc.). Also, keyword searches need additional logic to exclude similar, but irrelevant material. Note, for instance, the distinctly different meanings behind "FOUND LEAK IN CHECK VALVE," and "FOUND IN VALVE LEAK CHECK."

Other known methods seek to harness natural language processing (NLP), such as named entity recognition (NER), to identify words/tokens that were used in a certain grammatical sense to identify the components, conditions, and actions therein. However, while these methods represent a slight improvement over keyword searches, such methods still lack a complete sense of hierarchy and context. As an example, in such methods there is no way to distinguish whether a problem with a hinge categorically belonged to any particular door.

Another known method creates multi-label classifiers, which can be useful in classifying records by component type (for example, grouping together all records related to a door, regardless of whether it was a hinge or a latch problem), and can categorize records according to a finite set of subjective labels for action and condition, for example. However, multi-label classifiers require extensive human input to provide labeling.

### SUMMARY OF THE DISCLOSURE

A need exists for an effective, efficient, and accurate system and method that allow accurate retrieval of records representative of an arbitrary issue. Further, a need exists for such a system and method for retrieving maintenance records of vehicles, such as aircraft.

With those needs in mind, the present disclosure provide a system as defined in claim 1. Preferred embodiments of the system are defined in the appended dependent claims. The system includes a user interface having a display and an input device. The input device is configured for selection of one or more seed records regarding one or more maintenance issues of one or more vehicles. The user interface is further configured to output one or more first electronic signals that include the one or more seed records. A records database includes maintenance records for the one or more vehicles. A similarity engine control unit is in communication with the user interface and the records database. The similarity engine control unit is configured to (a) receive the one or more first electronic signals including the one or more seed records, (b) search the maintenance records within the records database, and find one or more first return records including a subset of the maintenance records that are similar to the one or more seed records, and (c) output one or more second electronic signals that include the one or more first return records to the user interface. The user interface is configured to show the one or more first return records on the display. The user interface is further configured for selection of relevancy of the one or more first return records to provide one or more first relevancy selections. The user interface is further configured to output one or more third electronic signals that include the one or more first relevancy selections.

In at least one example, the similarity engine control unit is further configured to receive the one or more third electronic signals having the one or more first relevancy selections, search the maintenance records within the records database and find one or more second return records that are similar to the one or more first relevancy selections, and output one or more fourth electronic signals that include the one or more second return records to the user interface. The display is configured to show the one or more second return records. The user interface is further configured for selection of relevancy of the one or more second return records to provide one or more second relevancy selections. The user interface is further configured to output one or more fifth electronic signals including the one or more second relevancy selections.

In at least one example, the similarity engine control unit is further configured to establish an issue definition set based on the one or more first relevancy selections. As a further example, the similarity engine control unit is further configured to automatically label one or more of the maintenance records within the records database based on the issue definition set.

In at least one example, the one or more vehicles include one or more aircraft.

In at least one example, the one or more relevancy selections include one or more true positives and one or more false positives. The one or more relevancy selections can also include one or more near-miss-negatives.

The similarity engine control unit can be further configured to select, at least in part, the one or more seed records.

In at least one example, the similarity engine control unit is further configured to generate one or more semantic similarity charts, and show the one or more semantic similarity charts on the display. In at least one example, the one or more semantic similarity charts show clusters of data.

Similarity may be in some examples measured by organizing or classifying records in an N dimension space, whereby one or more first return records are similar to one or more seed records if such one or more first return records are at a distance from one or more seed records of less than a threshold. The threshold may be a predetermined threshold. In some examples, the distance is selected from a Euclidian distance, a Manhattan distance, a Minkowski distance, a Chebyshev distance, an Edit distance, a Levenshtein distance, a Lee distance, a Hamming distance, a Jaro distance, a Bhattacharyya distance and a Hellinger distance. In some examples, the threshold is varied in order to satisfy a cost function. In some examples the cost function may be a mathematical expression that measures how well one or more first return records fit the one or more seed records.

In at least one example, the similarity engine control unit is an artificial intelligence (AI) or machine-learning system.

The system can also include one or more robots (or other such autonomous systems, devices or components) configured to automatically perform one or more maintenance operations on the one or more vehicles based, at least in part, on the one or more first relevancy selections.

The present disclosure provides a method as defined in claim 9. Preferred embodiments of the method are defined in the appended dependent claims. The method includes receiving, by the similarity engine control unit, the one or more first electronic signals including the one or more seed records; searching, by the similarity engine control unit, the maintenance records within the records database, and finding one or more first return records including a subset of the maintenance records that are similar to the one or more seed records; outputting, by the similarity engine, one or more second electronic signals that include the one or more first return records to the user interface; showing the one or more first return records on the display; selecting, via the user interface, relevancy of the one or more first return records to provide one or more first relevancy selections; and outputting, by the user interface, one or more third electronic signals that include the one or more first relevancy selections.

### BRIEF DESCRIPTION OF THE DRAWINGS

Figure 1 illustrates a block diagram of a system, according to an example of the present disclosure.
Figure 2 illustrates a front view of a display, according to an example of the present disclosure.
Figure 3 illustrates a front view of a display, according to an example of the present disclosure.
Figure 4 illustrates a front view of a display, according to an example of the present disclosure.
Figure 5 illustrates a flow chart of a method, according to an example of the present disclosure.
Figure 6 illustrates a schematic block diagram of a similarity engine control unit, according to an example of the present disclosure.
Figure 7 illustrates a perspective front view of an aircraft, according to an example of the present disclosure.

### DETAILED DESCRIPTION OF THE DISCLOSURE

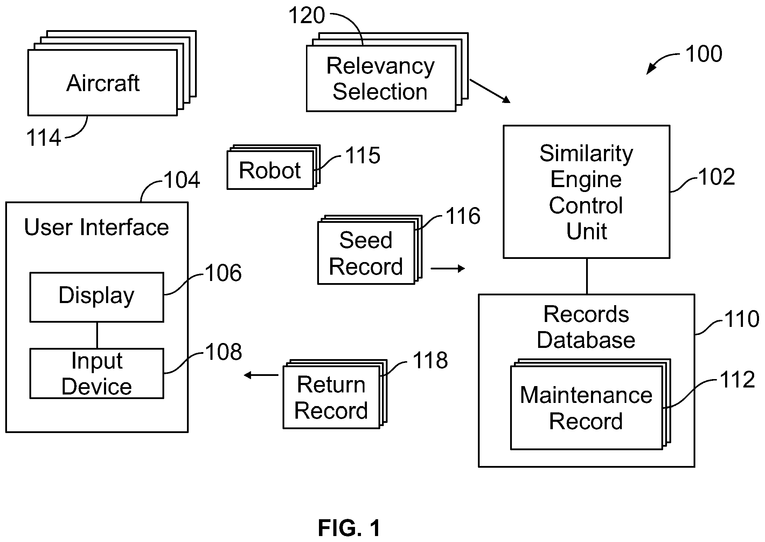

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition. Figure 1 illustrates a block diagram of a system 100, according to an example of the present disclosure. The system 100 includes a similarity engine control unit 102 in communication with a user interface 104, such as through one or more wired or wireless connections. In at least one example, the similarity engine control unit 102 is an artificial intelligence or machine learning system.

In at least one example, a definitive class set of records for the similarity engine control unit 102 is developed. One or more control units can use machine learning or artificial intelligence to develop the definitive class set of records.

The user interface 104 includes a display 106 and an input device 108. In at least one example, the display 106 is an electronic device configured to electronically show images, videos, text, and/or the like. The display 106 can be a monitor, screen, television, touchscreen, and/or the like. The input device 108 can include a keyboard, mouse, stylus, touchscreen interface (that is, the input device 108 can be integral with the display 106), and/or the like. The display 106 is configured to show visual graphics, videos, text, and/or the like. The user interface 104 can be, or part of, a computer workstation. As another example, the user interface 104 can be a handheld device, such as a smart phone, tablet, or the like. In at least one example, the similarity engine control unit 102 and the user interface 104 are part of a common computing system. As another example, the similarity engine control unit 102 can be remotely located from the user interface 104.

The similarity engine control unit 102 is also in communication with a records database 110, such as through one or more wired or wireless connections. The records database 110 stores issue records, such as maintenance records 112 for aircraft 114. Optionally, the records database 110 can store issue records for various other types of vehicles. As another example, the records database 110 can stores issue records for various other systems, devices, or the like other than vehicles. In at least one example, the records database 110 stores thousands, millions, or more maintenance records 112 for hundreds, thousands, or more aircraft 114.

In operation, an individual operates the user interface 104 to provide one or more seed records 116. For example, the individual uses the input device 108 to select one or more seed records 116. Each seed records 116 includes information regarding an arbitrary reliability issue. For example, each seed record 116 can be a maintenance record for a maintenance issue of an aircraft 114. The seed records 116 are initially selected, and define a class and/or cluster of records. In at least one example, the seed records 116 are not keywords, but rather records that are in the format of the maintenance records 112.

The similarity engine control unit 102 receives the seed record(s) 116 from the user interface 104. That is, the similarity engine control unit 102 receives one or more electronic signals that include the information of the seed record(s) 116. In response to receiving the seed record(s) 116, the similarity engine control unit 102 searches the maintenance records 112 within the records database 110 to find any maintenance records that appear to match the seed record(s) 116. For example, the similarity engine control unit 102 scans a large sample set in which labeled issue records are scattered. In response to determining similar maintenance records 112 within the records database 110, the similarity engine control unit 102 outputs the similar maintenance records 112 to the user interface as return records 118 (that is, one or more electronic signals including the information of the return records 118), which are shown on the display 106 of the user interface 104. The user then reviews the return records 118 to determine if such are relevant to the issue(s) provided in the seed record(s) 116. The user then operates the input device 108 to indicate which return records 118 are relevant, and which are irrelevant, and outputs one or more relevancy selections 120 (that is, one or more electronic signals including the information of the relevancy selections 120), which are selections regarding the relevancy of the return records 118. The user reviews the return records 118, and determines the relevant return records 118 ("true positives"), and irrelevant return records 118 ("false positives"). The similarity engine control unit 102 receives the relevancy selection(s) 120 from the user interface 104, and again searches the records database 110 to refine a similarity search of the maintenance records 112. Based the relevancy selections 120, the similarity engine control unit 102 finds similar maintenance records 112, and outputs return records 118 to the user interface 104, and the process can repeat.

The process can be repeated as often as desired to refine an issue definition set of maintenance records 112. That is, the process continues until an individual is satisfied with the return record(s) 112, which can then provide the issue definition set of maintenance records 112. The issue definition set defines a class and/or cluster of one or more issues (such as maintenance issues regarding the aircraft 114) of interest to provide an issue model. The similarity engine control unit 102 can supervise the process (for example, through use of a binary label classifier based on a threshold confidence score), or provide an unsupervised process, such as through a cluster classifier based on a threshold similarity score. In at least one example, the similarity engine control unit 102 uses the issue model (defined by the issue definition set of maintenance records 112) to automatically identify and automatically label (without human intervention) issues within the maintenance records 112.

As an example, a maintenance issue is no-start events, which relate to replacements of an engine starter due to unsuccessful engine starts. There are many records that relate to engine starter maintenance and inspection, and similar records that address auxiliary power unit starters. There are three prominent reasons for an unscheduled removal of an engine starter, all of which may be described as a "failure" (metal chips/debris, oil leak, no-start), but the no-start event is of special interest and does not necessarily even mention the engine starter directly. As another example, a maintenance issue is insect-related issues, which are rare. However, such can occur in a galley, but also anywhere in an aircraft. As another example, a maintenance issue is corrosion on exterior surfaces. Corrosion can occur anywhere on an aircraft, but flight surfaces, external panels and structures are most common. As another example, a maintenance issue is cracking on brakes. The aforementioned issues are merely examples, and are non-limiting.

As described herein, the similarity engine control unit 102 operates to identify documents (in particular, maintenance records 112) that are topically related. In at least one example, the similarity engine control unit 102 defines an arbitrary cluster or class of the maintenance records 112 on the basis of a definitive set of records exemplifying the issue (such as a maintenance or reliability issue) of interest. The issue may be extremely specific (for example, the cracking of a main landing gear disc brake, engine starter replacements resulting from no-start events) or equally broad in any respect (for example, all replacements on the aircraft, all stained upholstery in an internal cabin, all electrical shorts on the aircraft, all incidents of corrosion on the aircraft, all observations of insects on the aircraft, or the like). In at least one example, the similarity engine control unit 102 operates according to an iterative process of refinement, in which a user continually marks relevant/irrelevant examples from lists (for example, the return records 118) provided by the similarity engine control unit 102 via document similarity analysis (a form of unsupervised machine learning). In at least one example, the similarity engine control unit 102 then submits the definitive set for a model to use as a binary classifier on an ongoing basis.

The system 100 and method described herein provides a middle ground between existing categorical information (component codes, arbitrary condition/action categories), and undefined, ad-hoc inquiries, while enabling user analysts to define any issue of consequence for ongoing monitoring, forecast, predictive maintenance alert development, and inventory optimization. In at least one example, the similarity engine control unit 102 identifies topically related documents within the maintenance records 112, with special consideration of the fundamental problem of identifying maintenance records related to a common reliability issue. Downstream forms of reliability analysis, fix effectiveness analysis, predictive maintenance, and maintenance/inventory optimization depend on an accurate collection of related, representative records of the issue, regardless of its specificity, type, or component.

In at least one example, the similarity engine control unit 102 utilizes a large language model, which is pre-trained on relevant aviation maintenance corpora (including maintenance records and maintenance reference manuals). The similarity engine control unit 102 can operate as an unsupervised similarity engine, the performance of which depends on the choice of embedding (character, token, word, sentence, graph) and similarity metric (for example, cosine similarity) and implementation (for example, distance-from-centroid).

As described herein, a user first seeks at least some relevant records to form a starting set. In particular, the user initially determines the seed records 116, which are then input into the similarity engine control unit 102 via the user interface 104. In at least one example, the similarity engine control unit 102 can assist with the selection of the seed records 116, such as through artificial intelligence, which returns records by category or through conversation (for example, "please find all records describing unsuccessful autostarts").

After receiving the seed records 116, the similarity engine control unit 102 searches the maintenance records 112 to find an initial set of similar maintenance records 112, which are provided on the display 106 of the user interface 104 as the return records 118. The user reviews the list of return records 118, and indicates those that are relevant (for example, which records exemplify the issue and which do not). The similarity engine control unit 102 receives the list of relevant records (and optionally irrelevant records) as the relevancy selections 120. The similarity engine control unit 102 then operates in an unsupervised fashion to further search the records database 110 based on the relevancy selections 120, and the process repeats, until the user is satisfied that most - if not all - of the return records 118 adequately represent the issue of interest. As the similarity iterations progress, near-miss-false positives become increasingly specific and valuable As an example, the user can provide input via the user interface 104 that certain return records are close to the issue of interest, with a qualifier, which can be provided in the relevancy selections 120 for the similarity engine control unit 102 to further refine a search of the records database 110. The near-miss-negatives allow the similarity engine control unit 102 to learn not just from a positive set, but from a curated set of negatives, defining the class with far more precision than a randomly selected and labeled training set would have permitted.

In at least one example, if satisfied, the user provides a final selection of relevancy selections 120, which form a definitive issue set. The similarity engine control unit 102 then utilizes the definitive issue set to automatically label (without human intervention) each of the maintenance records 112 within the records database 110 that appear to belong to the definitive issue set. This can be a supervised learning step, where the performance of the classifier can be definitively measured. In this manner, an arbitrary, customized issue class is defined as desired.

As described herein, the similarity engine control unit 102 maximizes or otherwise increases efficiency of human expert attention, and circumvents the limitations inherent in any predetermined, discrete, multi-label classification scheme. Notably, conventional and traditional supervised machine-learning methods typically require the definition of multiple, discrete classes, where all possibilities of interest (and in practice, a plurality of possibilities on non-interest) need to be labeled. If the labeling of documents requires subjective judgment and human expertise, then humans typically manually label the documents. Subtler distinctions in language between classes necessitate more human labeling. More classes necessitate more human labeling. However, many individuals will ultimately prove uninterested in the majority of the classes. Furthermore, it is impossible to anticipate every semantic pattern or distinction for individuals will ultimately be interested.

In at least one example, the similarity engine control unit 102 delivers or otherwise includes a definitive class set, which can be used to train the similarity engine control unit 102 and/or a supervised-model classifier. The similarity engine control unit 102 can include the supervised-model classifier. In at least one example, the similarity engine control unit 102 utilizes an unsupervised machine-learning process responsible for searching the documents within the database (for example, the hundreds, thousands, millions or more maintenance records 112 within the records database 110). For example, given a sample input of N documents such as N seed records 116 (where N is an arbitrary but nonzero natural number), the similarity engine control unit 102 efficiently identifies similar documents in the records database 110, and output returns records 118 ("positives") for an individual to manually label, and binarily confirm ("true positive") or dismiss ("false positive"), thereby providing the set of relevancy selections 120. The initial batch of N seed records 116 may itself be produced from a simple method (for example, multiple keyword searches or a human review of a random selection of documents), or a more sophisticated preliminary method such as via artificial intelligence assistance by the similarity engine control unit 102.

In at least one example, the similarity engine control unit 102 is tuned or otherwise programmed to explore adjacent semantics, and thus thoroughly establish the boundaries of the pattern underlying the intended issue. A high true positive rate ("precision") is desirable and an indicator of the performance in recognizing the topical semantic patterns embedded in the seed records 116 supplied by the user. However, too high of a precision may indicate that the similarity engine control unit 102 is returning only a narrow subset of the population related to the intended issue, and the definitive set resulting from the refinement process will become skewed, biased, or overfit toward that subset. Therefore, the similarity engine control unit 102 is configured to return positives that are reasonable extrapolations or adjacencies to the patterns supplied in the initial rounds. Otherwise, the similarity engine control unit 102 might risk over-fitting to a narrow definition of the issue (for example, "rust on the ailerons" instead of "rust on all wing surfaces"). Counterintuitively, this means that an objective of the similarity engine control unit 102 is not to maximize precision, but to deliberately introduce test positives from the periphery, for an average precision between 70%-90%, thereby increasing efficient use of human attention, by confirming core patterns in the definitive set while testing the breadth and extent of semantic patterns and their boundaries of the topic.

In at least one example, the similarity engine control unit 102 can include or otherwise utilize a discriminative large language model (which can also be used for the subsequent supervised machine-learning phase of classifier training), such as one based on an encoders-only transformers large language model architecture. Multiple embeddings (character embeddings, word embeddings, and sentence embeddings) can be tested or user-optional when tuning the similarity engine. Document similarity can be assessed from multiple similarity measurement methods (for example, vector cosine similarity). Similarity can also be measured with respect to a common pattern in the existing set (for example, the common element in multiple records is the mention of a particular term) through a mechanism such as the vector mean or, in the interest of exploring periphery, through seeking similarity to each individual record one at a time. Optionally, similarity can be measured at the behest of s user (for example, an individual can note on a return record, "find more like this").

In at least one other example, the similarity engine control unit 102 can include a generative large language model, which can be prompted to seek documents similar to the set supplied, either through a pre-fabricated prompt or through a conversational refinement with the user via the user interface 104. In such example, the similarity engine control unit 102 may delegate some of the responsibility for the effectiveness of the search to an individual to craft a query to best represent the issue sought (for example, "Find all maintenance records similar to the following, but ignore all records incurred during scheduled maintenance").

In at least one example, the similarity engine control unit 102 stores the seed records 116, the returns records 118, and/or the relevancy selections 120 in vector format. The similarity engine control unit 102 can include a retrieval-augmented generative (RAG) model or the like. In this example, the user may rely entirely on prompt engineering to produce the initial batch of seed records 116 (for example, "find N examples of records describing unscheduled maintenance on the nose landing gear" or "find all records mentioning insects inside of the aircraft"). In at least one example, the similarity engine control unit 102 utilizes a large language model (which can be programmed, tuned, or trained-from-scratch) in relation to the maintenance records 112, and adjacent documents (for example, aircraft maintenance manuals) to improve upon semantic reasoning and context performance.

In at least one example, maintenance can be performed with respect to the aircraft 114 based on maintenance records 112. For example, maintenance operations are performed on one or more of the aircraft 114 based on maintenance records 112 as automatically labeled by the similarity engine control unit 102 through use of the issue definition set. After a maintenance record 112 for an aircraft 114 is labeled by the similarity engine control unit 102, an alert can be sent by the similarity engine control unit 102 to the user interface 104 that a maintenance operation is to be performed in relation to the aircraft 114. The maintenance operation can be automatically performed, such as by one or more robots 115.

As described herein, the system 100 includes the user interface 104 including the display 106 and the input device 108. The input device 108 is configured for selection of one or more seed records 116 regarding one or more maintenance issues of one or more aircraft 114. The user interface 104 is further configured to output one or more first electronic signals that include the one or more seed records 116. The records database 110 includes (for example, stores) the maintenance records 112 for the one or more aircraft 114. The similarity engine control unit 102 is in communication with the user interface 104 and the records database 110. The similarity engine control unit 102 is configured to receive the one or more first electronic signals including the one or more seed records 116. The similarity engine control unit 102 is further configured to search the maintenance records 112 within the records database 110 and find one or more first return records 118 including a subset of the maintenance records 112 that are similar to the one or more seed records 116. The similarity engine control unit 102 is further configured to output one or more second electronic signals that include the one or more first return records 118 to the user interface 104. The user interface 104 is configured to show the one or more first return records 118 on the display 106. The user interface 104 is further configured for selection of relevancy of the one or more first return records 118 to provide one or more first relevancy selections 120, and output one or more third electronic signals including the one or more first relevancy selections 120.

In at least one example, the similarity engine control unit 102 is further configured to receive the third electronic signal(s) having the one or more first relevancy selections 120. The similarity engine control unit 102 can then search the maintenance records 112 within the records database 110 and find one or more second return records 118 that are similar to the one or more first relevancy selections. The similarity engine control unit 102 can then output one or more fourth electronic signals that include the one or more second return records 118 to the user interface 104, which is configured to show the one or more second return records on the display 106. The user interface 104 is further configured for selection of relevancy of the one or more second return records 118 to provide one or more second relevancy selections 120, which are output as one or more fifth electronic signals.

In at least one example, the similarity engine control unit 102 is further configured to establish an issue definition set based on the one or more relevancy selections 120. As a further example, the similarity engine control unit 102 is further configured to automatically label one or more of the maintenance records 112 within the records database 110 based on the issue definition set.

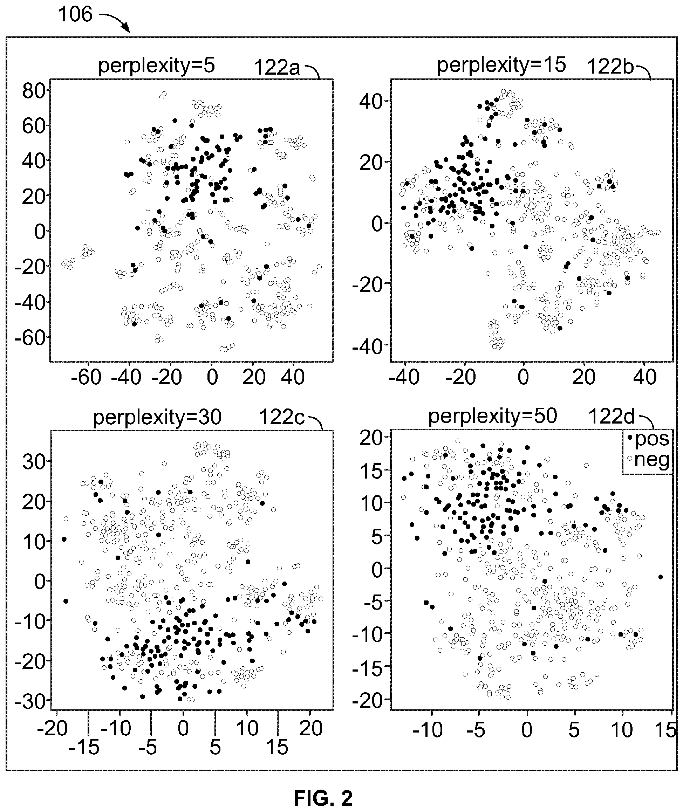

Figure 2 illustrates a front view of a display 106, according to an example of the present disclosure. Referring to Figures 1 and 2, as noted, in at least one example, the similarity engine control unit 102 is tuned or otherwise programmed to explore adjacent semantics. For example, the similarity engine control unit 102 is configured to return positives that are reasonable extrapolations or adjacencies to patterns supplied in initial rounds. Accordingly, the similarity engine control unit 102 can be configured to output one or more semantic similarity charts to allow an individual to visualize a clustering of labeled records, thereby providing an informative feedback mechanism to allows the individual to estimate a value and effectiveness of a resulting classifier.

As shown in Figure 2, the similarity engine control unit 102 generates semantic similarity charts 122a-d. It is to be understood that the similarity charts 122a-d shown in Figure 2 are merely exemplary, and not limiting. The similarity charts 122a-d provide readily discernable electronic, graphical indications on the display 106. The similarity engine control unit 102 provides the semantic similarity charts 122a-d to winnow search results. By generating and providing the semantic similarity charts 122a-d, the similarity control unit 102 reduces complexity by organizing and sorting search results, thereby allowing an individual to readily discern valuable information from less relevant information.

For example, the similarity engine control unit 102 considers documents (for example, electronic documents stored in the records database 110) as datapoints in space. As can be appreciated, some of the documents are of interest, while others are of no interest, or less relevant. The relevant documents may be commingled in the records database 110 with the less relevant documents. Accordingly, the similarity engine control unit 102 operates to cluster data, which allows for ready discernment of relevant documents in relation to less relevant documents. The similarity engine control unit 102 separates the documents (for example, search results) into separate clusters, thereby allowing an individual to readily determine areas of documents of relevancy.

Conversely, the problem of finding a needle in a haystack exists. For example, there may be little distinction between what is relevant in relation to what is not relevant. Such an example is shown in Figure 2. The four semantic similarity charts 122a-d (for example, plots of search results shown in clusters), as generated and shown by the similarity engine control unit 102, show a single sample of documents represented as datapoints in two-dimensional space. The four plots are used as an approximation of a distribution of points from a high dimension space (orders of magnitude larger than two). The approximation compresses the spatial distribution of the data points to a two-dimensional representation. The varying parameter used to make each plot, namely, perplexity, is analogous to a zoom of a camera lens: focusing on large scale vs. small scale differences in location between points in the high dimension space. Within the plots 122a-d, there does not appear to be a formation of clear and distinct separate groups. Instead, there appears to be a noisy overlap between the documents of interest (represented by black dots) and those that are not of interest (represented by gray dots). As such, through the semantic similarity charts 122a-d shown by the similarity engine control unit 102, an individual can discern that the resulting data is high-entropy, and may not be easy to sort, distill, and/or identify.

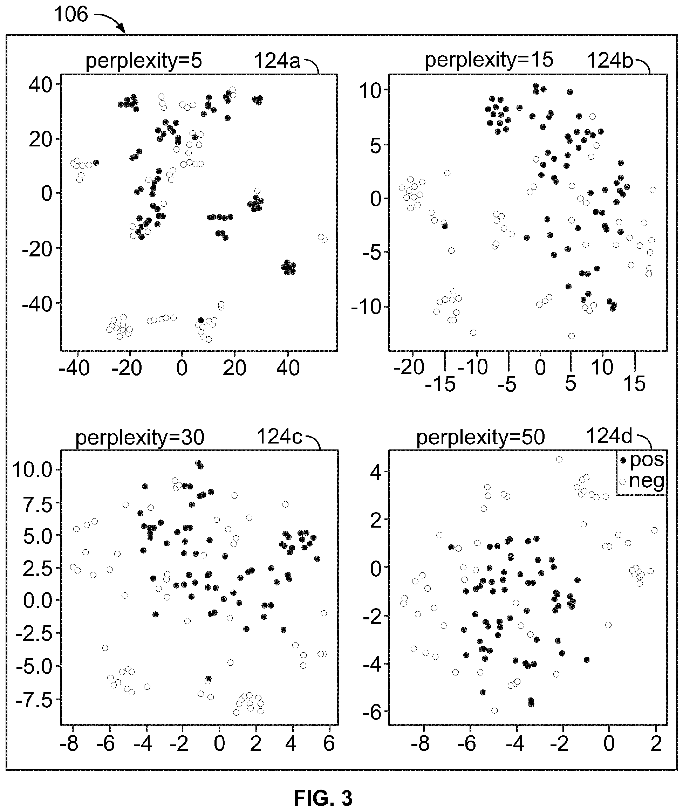

Figure 3 illustrates a front view of a display 106, according to an example of the present disclosure. As shown in Figure 3, the similarity engine control unit 102 generates semantic similarity charts 124a-d. It is to be understood that the similarity charts 124a-d shown in Figure 3 are merely exemplary, and not limiting. As shown in Figure 3, the datapoints shown in the plots (that is, the charts 124a-d) show a sample of documents a high dimensional space, which is also compressed to a two-dimensional, electronic representation. The charts 124a-d in Figure 3 provide clearer boundaries between the relevant (black dots) and irrelevant (gray dots). Referring to Figures 1-3, the similarity engine control unit 102 generates the semantic similarity charts, and electronically shows them on the display 106. The semantic similarity charts allow an individual to quickly and readily discern relevancy of document search results via clustering. If the clustering is not well-defined (for example, as shown in Figure 2), the individual may determine that a more focused search of documents may be needed.

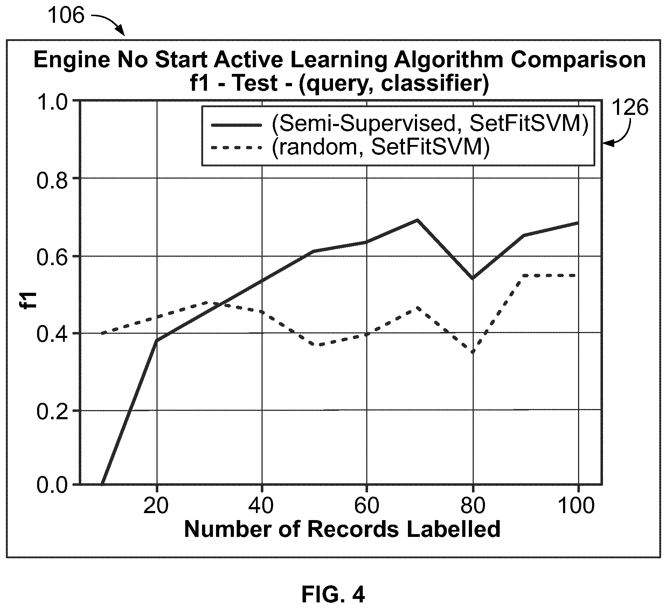

Figure 4 illustrates a front view of a display 106, according to an example of the present disclosure. The similarity engine control unit 102 may generate the chart 126, and electronically show the chart 126 on the display 106. In this example, the similarity engine control unit 102 compares the semi-supervised guided learning of examples of the present disclosure in relation to conventional, random learning. As shown in Figure 4, examples of the present disclosure provide a substantially more accurate method than the conventional approach.

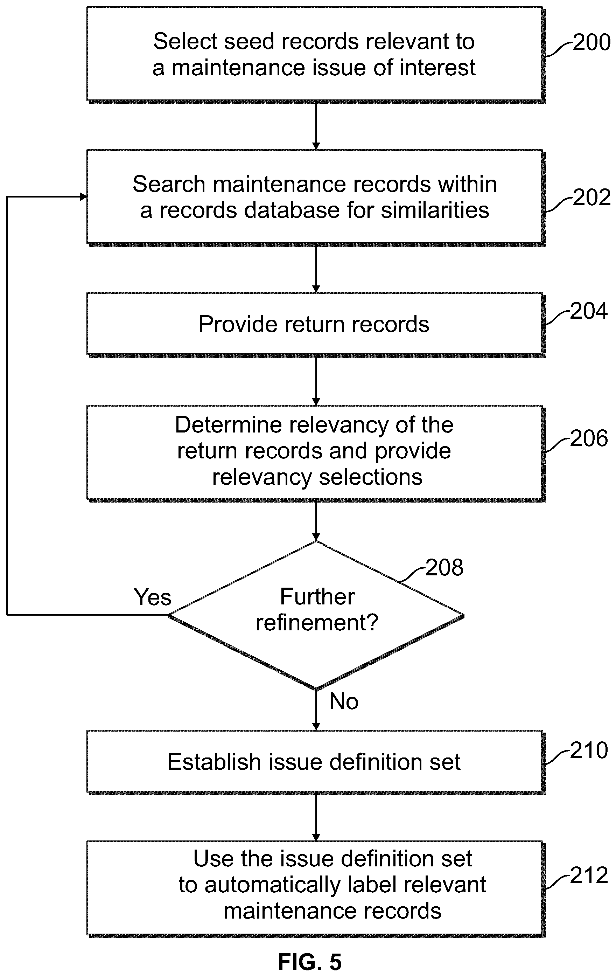

Figure 5 illustrates a flow chart of a method, according to an example of the present disclosure. Referring to Figures 1 and 5, at 200, an individual operates the user interface to select seed records 116 relevant to a maintenance issue of interest. The individual can manually select the seed records 116, or the similarity engine control unit 102 can assist with the selection, such as through prompts.

At 202, the similarity engine control unit 102 receives the seed records 116, which are then used to search the maintenance records 112 within the records database 110 to find maintenance records 112 that are similar to the seed records 116. At 204, the similarity engine control unit 102 provides the similar maintenance records to the user interface 104 as the return records 118 (that is, a subset of the maintenance records 112 determined to be similar to the seed records 116).

At 206, the individual reviews the return records 118, such as on the display 106 of the user interface 104, and determines relevancy of each of each of the return records, thereby providing the relevancy selections 120. The relevancy selections 120 include true positives, which indicate that a particular record is relevant. In at least one example, the relevancy selections 120 can also include false positions, which indicate that a particular record is not relevant. The similarity engine control unit 102 uses the true positives and the false positives to further refine a search of the maintenance records 112. In at least one example, the relevancy selections 120 can also include notes input by the user via the input device. The notes can include further instructions for searching (for example, "find more like this," "this is close, but does not include X," and the like).

At 208, the user determines if further refinement of the relevancy selections 120 is necessary. That is, the user determines if further searching based on the relevancy selections 120 is needed. If so, the method returns to 202.

If, however, the user is satisfied with a set of relevancy selections, the method proceeds from 208 to 210, at which the set of relevancy selections establishes an issue definition set. At 212, the similarity engine control unit 102 can then use the issue definition set to automatically label relevant maintenance records 112 within the records database 110.

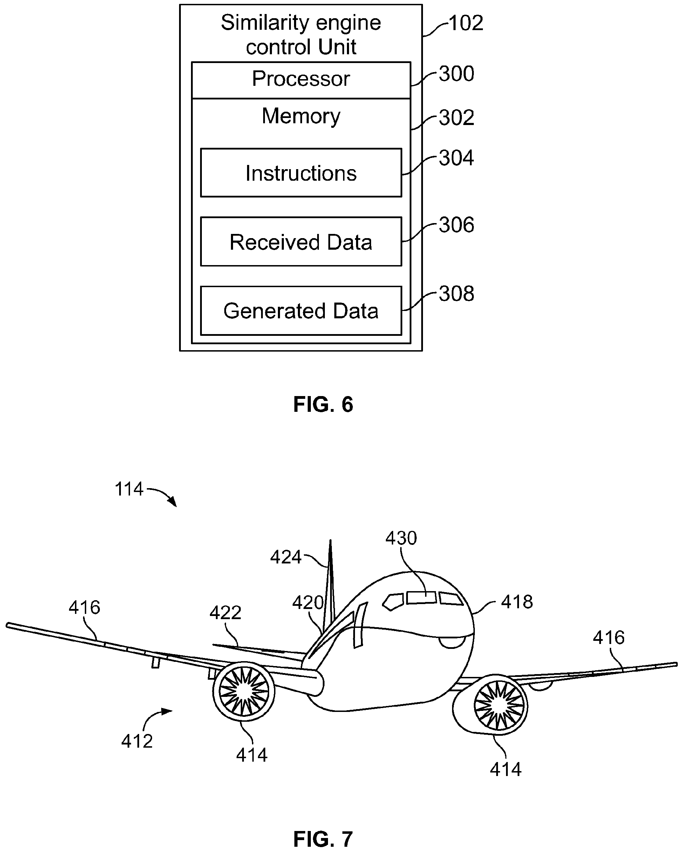

Figure 6 illustrates a schematic block diagram of the similarity engine control unit 102, according to an example of the present disclosure. In at least one example, the similarity engine control unit 102 includes at least one processor 300 in communication with a memory 302. The memory 302 stores instructions 304, received data 306, and generated data 308. The similarity engine control unit 102 shown in Figure 6 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the similarity engine control unit 102 may be or include one or more processors that are configured to control operation, as described herein.

The similarity engine control unit 102 is configured to execute a set of instructions that are stored in one or more data storage units or elements (such as one or more memories), in order to process data. For example, the similarity engine control unit 102 may include or be coupled to one or more memories. The data storage units may also store data or other information as desired or needed. The data storage units may be in the form of an information source or a physical memory element within a processing machine.

The set of instructions may include various commands that instruct the similarity engine control unit 102 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the similarity engine control unit 102. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the similarity engine control unit 102 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Referring to Figures 1-6, examples of the subject disclosure provide systems and methods that allow large amounts of data to be quickly and efficiently analyzed by a computing device. For example, the similarity engine control unit 102 can receive and analyze hundreds, thousands, millions, or more maintenance records 112 from hundreds, thousands, or more aircraft 114. As such, large amounts of data, which may not be readily discernable by human beings, are being tracked and analyzed. The vast amounts of data are efficiently organized and/or analyzed by the similarity engine control unit 102, as described herein. The similarity engine control unit 102 analyzes the data in a relatively short time in order to quickly and efficiently determine maintenance records 112 having similar issues as the seed records 116, for example. A human being is incapable of analyzing such large amounts of data in an effective and efficient manner. As such, examples of the present disclosure provide increased and efficient functionality, and vastly superior performance in relation to a human being reviewing the vast amounts of data.

In at least one example, components of the system 100, such as the similarity engine control unit 102, provide and/or enable a computer system to operate as a special computer system for classifying issues, such as maintenance issues. The similarity engine control unit 102 improves upon standard computing devices by determining such information and automatically communicating with individuals (such as operators of aircraft) in an efficient and effective manner.

In at least one example, the similarity engine control unit 102 uses machine learning algorithms which automatically analyze the maintenance records 112 to find those that are similar to the seed records 116, as well as automatically label certain maintenance records 112 based on the issue definition set. In at least one example, all or part of the systems and methods described herein are or otherwise include an artificial intelligence (AI) or machine-learning system that can automatically perform the operations of the methods also described herein. In at least one example, the similarity engine control unit 102 can be or otherwise include a deterministic or rules based evaluation system. In at least one example, the similarity engine control unit 102 can be an artificial intelligence or machine learning system. These types of systems may be trained from outside information and/or self-trained to repeatedly improve the accuracy with how data is analyzed to determine similar issues, automatically label maintenance records, and the like. Over time, these systems can improve by determining and communicating with increasing accuracy and speed, thereby significantly reducing the likelihood of any potential errors. For example, the AI or machine-learning systems can learn and determine models, associate such models with received data, and determine potential conflicts. The AI or machine-learning systems described herein may include technologies enabled by adaptive predictive power and that exhibit at least some degree of autonomous learning to automate and/or enhance pattern detection (for example, recognizing irregularities or regularities in data), customization (for example, generating or modifying rules to optimize record matching), and/or the like. The systems may be trained and re-trained using feedback from one or more prior analyses of the data, ensemble data, and/or other such data. Based on this feedback, the systems may be trained by adjusting one or more parameters, weights, rules, criteria, or the like, used in the analysis of the same. This process can be performed using the data and ensemble data instead of training data, and may be repeated many times to repeatedly improve the determinations and communications described herein. The training minimizes conflicts and interference by performing an iterative training algorithm, in which the systems are retrained with an updated set of data, and based on the feedback examined prior to the most recent training of the systems. This provides a robust analysis model that can better determine issue validation, and determine when to select a record as being similar, automatically label a record, and the like.

In one example, the similarity engine control unit 102 includes or represents an artificial neural network (ANN) that identifies patterns in the visual, vectoral, or vector space representations of data, classifies the patterns (e.g., assigns a class to an identified pattern, such as class #1, class #2, and so on) based on the contents of the patterns that are identified, and identifies records (for example, documents) based on the classifications. Usage of a specially trained ANN to identify records in this way provides improvements over traditional methods of identifying documents, including more accurate identification of the relevant information, identification of relevant documents on a much larger scale than is possible with humans identifying the documents, and identification of the documents much faster and/or at a much more rapid frequency than is possible with humans. The ANN can be realized through software, hardware, or a combination of software and hardware. The structure of the ANN can be a series of layers, with each layer including one or more artificial neurons arranged in one or more neuron arrays. Each of these neurons may include or represent a register, a microprocessor, and at least one input. Each neuron can produce an output, or activation, based on an activation function that uses the outputs of the previous layer and a set of weights as inputs. Each neuron in a neuron array can be connected to another neuron in the same layer or in another layer via one or more synaptic circuits. A synaptic circuit may include a memory for storing a synaptic weight. One example of this ANN may be a deep neural network having an input layer, an output layer, and a plurality of fully connected hidden layers. In some examples, the ANN (e.g., the similarity engine control unit 102) can be implemented by an application-specific integrated circuit (ASIC) specially customized for the specific artificial intelligence application described herein and provide superior computing capabilities and reduced electricity consumption compared to traditional computers.

Training data can be generated by receiving continuous data at the similarity engine control unit 102 and using the similarity engine control unit 102 to discretize the continuous data. Optionally, the similarity engine control unit 102 can be trained with a pretrained model. The training data or pretrained model may be received by the similarity engine control unit 102 remotely over one or more networks. The training data may be historical data, which the neural network can use to learn patterns in the visual representations of the data to identify or detect the same (or similar) patterns in other data. The trained ANN monitors additional visual representations of data to identify patterns and classify the patterns. If the trained ANN detects one or more patterns, the trained ANN can classify the pattern(s) to generate classification data which can be output to a user and/or used to re-train the ANN.

The ANN of the similarity engine control unit 102 can continue to learn to improve identification of patterns in data visualizations, as well as improve the classification of the identified patterns. This continued learning can occur by, for example, changing the output generated by one or more of the neurons responsive to receiving the same input (e.g., a neuron produces a different output after the change), changing the activation function of one or more neurons, changing one or more of the weights, and/or changing one or more of the connections between the neurons (or which neurons are connected with each other). Changing one or more of these factors can cause the ANN to produce a different output (e.g., a different pattern is identified and/or a different classification is selected) than prior to the change.

Figure 7 illustrates a perspective front view of an aircraft 114, according to an example of the present disclosure. The aircraft 114 includes a propulsion system 412 that includes engines 414, for example. Optionally, the propulsion system 412 may include more engines 414 than shown. The engines 414 are carried by wings 416 of the aircraft 114. In other examples, the engines 414 may be carried by a fuselage 418 and/or an empennage 420. The empennage 420 may also support horizontal stabilizers 422 and a vertical stabilizer 424. The fuselage 418 of the aircraft 114 defines an internal cabin 430, which includes a flight deck or cockpit, one or more work sections (for example, galleys, personnel carry-on baggage areas, and the like), one or more passenger sections (for example, first class, business class, and coach sections), one or more lavatories, and/or the like. Figure 4 shows an example of an aircraft 114. It is to be understood that the aircraft 114 can be sized, shaped, and configured differently than shown in Figure 7.

Optionally, examples of the present disclosure can be used with various other types of vehicles, such as automobiles, trains, watercraft, spacecraft, or the like. Also, optionally, examples of the present disclosure can be used with various other devices, systems, components, or the like other than vehicles. For example, examples of the present disclosure can be used with household appliances.

Further, the disclosure comprises examples according to the following clauses:
Clause 1. A system comprising:
   a user interface including a display and an input device, wherein the input device is configured for selection of one or more seed records regarding one or more maintenance issues of one or more vehicles, and wherein the user interface is further configured to output one or more first electronic signals that include the one or more seed records;
   a records database including maintenance records for the one or more vehicles; and
   a similarity engine control unit in communication with the user interface and the records database, wherein the similarity engine control unit is configured to:
      receive the one or more first electronic signals including the one or more seed records,
      search the maintenance records within the records database, and find one or more first return records including a subset of the maintenance records that are similar to the one or more seed records, and
      output one or more second electronic signals that include the one or more first return records to the user interface, wherein the user interface is configured to show the one or more first return records on the display, wherein the user interface is further configured for selection of relevancy of the one or more first return records to provide one or more first relevancy selections, and wherein the user interface is further configured to output one or more third electronic signals that include the one or more first relevancy selections.
Clause 2. The system of Clause 1, wherein the similarity engine control unit is further configured to:
   receive the one or more third electronic signals having the one or more first relevancy selections,
   search the maintenance records within the records database and find one or more second return records that are similar to the one or more first relevancy selections, and
   output one or more fourth electronic signals that include the one or more second return records to the user interface, wherein the user interface is configured to show the one or more second return records, wherein the user interface is further configured for selection of relevancy of the one or more second return records to provide one or more second relevancy selections, and wherein the user interface is further configured to output one or more fifth electronic signals including the one or more second relevancy selections.
Clause 3. The system of Clauses 1 or 2, wherein the similarity engine control unit is further configured to establish an issue definition set based on the one or more first relevancy selections.
Clause 4. The system of Clause 3, wherein the similarity engine control unit is further configured to automatically label one or more of the maintenance records within the records database based on the issue definition set.
Clause 5. The system of any of Clauses 1-4, wherein the one or more vehicles comprise one or more aircraft.
Clause 6. The system of any of Clauses 1-5, wherein the one or more first relevancy selections comprise one or more true positives and one or more false positives.
Clause 7. The system of Clause 6, wherein the one or more first relevancy selections further comprise one or more near-miss-negatives.
Clause 8. The system of any of Clauses 1-7, wherein the similarity engine control unit is further configured to select, at least in part, the one or more seed records.
Clause 9. The system of any of Clauses 1-8, wherein the similarity engine control unit is further configured to:
   generate one or more semantic similarity charts; and
   show the one or more semantic similarity charts on the display.
Clause 10. The system of Clause 9, wherein the one or more semantic similarity charts show clusters of data.
Clause 11. The system of any of Clauses 1-10, wherein the similarity engine control unit is an artificial intelligence (AI) or machine-learning system.
Clause 12. The system of any of Clauses 1-11, further comprising one or more robots configured to automatically perform one or more maintenance operations on the one or more vehicles based, at least in part, on the one or more first relevancy selections.
Clause 13. A method for a system comprising:
   a user interface including a display and an input device, wherein the input device is configured for selection of one or more seed records regarding one or more maintenance issues of one or more vehicles, and wherein the user interface is further configured to output one or more first electronic signals that include the one or more seed records;
   a records database including maintenance records for the one or more vehicles; and
   a similarity engine control unit in communication with the user interface and the records database,
   wherein the method comprises:
      receiving, by the similarity engine control unit, the one or more first electronic signals including the one or more seed records;
      searching, by the similarity engine control unit, the maintenance records within the records database, and finding one or more first return records including a subset of the maintenance records that are similar to the one or more seed records;
      outputting, by the similarity engine, one or more second electronic signals that include the one or more first return records to the user interface;
      showing the one or more first return records on the display;
      selecting, via the user interface, relevancy of the one or more first return records to provide one or more first relevancy selections; and
      outputting, by the user interface, one or more third electronic signals that include the one or more first relevancy selections.
Clause 14. The method of Clause 13, further comprising:
   receiving, by the similarity engine control unit, the one or more third electronic signals having the one or more first relevancy selections;
   searching, by the similarity engine control unit, the maintenance records within the records database, and finding one or more second return records that are similar to the one or more first relevancy selections;
   outputting, by the similarity engine control unit, one or more fourth electronic signals that include the one or more second return records to the user interface;
   showing the one or more second return records on the display;
   selecting, via the user interface, relevancy of the one or more second return records to provide one or more second relevancy selections; and
   outputting, by the user interface, one or more fifth electronic signals including the one or more second relevancy selections.
Clause 15. The method of Clauses 13 or 14, further comprising establishing, by the similarity engine control unit, an issue definition set based on the one or more first relevancy selections.
Clause 16. The method of Clause 15, further comprising automatically labeling, by the similarity engine control unit, one or more of the maintenance records within the records database based on the issue definition set.
Clause 17. The method of any of Clauses 13-16, wherein the one or more vehicles comprise one or more aircraft.
Clause 18. The method of any of Clauses 13-17, wherein the one or more first relevancy selections comprise one or more true positives and one or more false positives.
Clause 19. The method of Clause 18, wherein the one or more first relevancy selections further comprise one or more near-miss-negatives.
Clause 20. The method of any of Clauses 13-19, further comprising selecting, at least in part by the similarity engine control unit, the one or more seed records.
Clause 21. The method of any of Clauses 13-20, further comprising:
   generating one or more semantic similarity charts; and
   showing the one or more semantic similarity charts on the display, wherein the one or more semantic similarity charts show clusters of data.
Clause 22. The method of any of Clauses 13-21, wherein the similarity engine control unit is an artificial intelligence (AI) or machine-learning system.
Clause 23. The method of any of Clauses 13-22, further comprising automatically performing one or more maintenance operations on the one or more vehicles based, at least in part, on the one or more first relevancy selections.

As described herein, examples of the present disclosure provide effective, efficient, and accurate systems and methods that allow accurate retrieval of records representative of an arbitrary issue. Further, examples of the present disclosure provide such systems and methods for retrieving maintenance records of vehicles, such as aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system comprising:
a user interface including a display and an input device, wherein the input device is configured for selection of one or more seed records regarding one or more maintenance issues of one or more vehicles, and wherein the user interface is further configured to output one or more first electronic signals that include the one or more seed records;
a records database including maintenance records for the one or more vehicles; and
a similarity engine control unit in communication with the user interface and the records database, wherein the similarity engine control unit is configured to:
receive the one or more first electronic signals including the one or more seed records,
search the maintenance records within the records database, and find one or more first return records including a subset of the maintenance records related to the one or more seed records, and
output one or more second electronic signals that include the one or more first return records to the user interface, wherein the user interface is configured to show the one or more first return records on the display, wherein the user interface is further configured for selection of relevancy of the one or more first return records to provide one or more first relevancy selections, and wherein the user interface is further configured to output one or more third electronic signals that include the one or more first relevancy selections.

2. The system of claim 1, wherein the similarity engine control unit is further configured to:
receive the one or more third electronic signals having the one or more first relevancy selections,
search the maintenance records within the records database and find one or more second return records related to the one or more first relevancy selections, and
output one or more fourth electronic signals that include the one or more second return records to the user interface, wherein the user interface is configured to show the one or more second return records, wherein the user interface is further configured for selection of relevancy of the one or more second return records to provide one or more second relevancy selections, and wherein the user interface is further configured to output one or more fifth electronic signals including the one or more second relevancy selections.

3. The system of claim 1 or 2, wherein the similarity engine control unit is further configured to establish an issue definition set based on the one or more first relevancy selections.

4. The system of claim 3, wherein the similarity engine control unit is further configured to automatically label one or more of the maintenance records within the records database based on the issue definition set.

5. The system of anyone of claims 1 to 4, wherein the one or more vehicles comprise one or more aircraft.

6. The system of anyone of claims 1 to 5, wherein the one or more first relevancy selections comprise one or more true positives and one or more false positives.

7. The system of anyone of claims 1 to 6, wherein the similarity engine control unit is further configured to select, at least in part, the one or more seed records.

8. The system of anyone of claims 1 to 7, further comprising one or more robots configured to automatically perform one or more maintenance operations on the one or more vehicles based, at least in part, on the one or more first relevancy selections.

9. A method for a system comprising:
a user interface including a display and an input device, wherein the input device is configured for selection of one or more seed records regarding one or more maintenance issues of one or more vehicles, and wherein the user interface is further configured to output one or more first electronic signals that include the one or more seed records;
a records database including maintenance records for the one or more vehicles; and
a similarity engine control unit in communication with the user interface and the records database,
wherein the method comprises:
receiving, by the similarity engine control unit, the one or more first electronic signals including the one or more seed records;
searching, by the similarity engine control unit, the maintenance records within the records database, and finding one or more first return records including a subset of the maintenance records that are similar to the one or more seed records;
outputting, by the similarity engine, one or more second electronic signals that include the one or more first return records to the user interface;
showing the one or more first return records on the display;
selecting, via the user interface, relevancy of the one or more first return records to provide one or more first relevancy selections; and
outputting, by the user interface, one or more third electronic signals that include the one or more first relevancy selections.

10. The method of claim 9, further comprising:
receiving, by the similarity engine control unit, the one or more third electronic signals having the one or more first relevancy selections;
searching, by the similarity engine control unit, the maintenance records within the records database, and finding one or more second return records that are similar to the one or more first relevancy selections;
outputting, by the similarity engine control unit, one or more fourth electronic signals that include the one or more second return records to the user interface;
showing the one or more second return records on the display;
selecting, via the user interface, relevancy of the one or more second return records to provide one or more second relevancy selections; and
outputting, by the user interface, one or more fifth electronic signals including the one or more second relevancy selections.

11. The method of claim 9 or 10, further comprising establishing, by the similarity engine control unit, an issue definition set based on the one or more first relevancy selections.

12. The method of anyone of claims 9 to 11, wherein the one or more vehicles comprise one or more aircraft.

13. The method of anyone of claims 9 to 11, wherein the one or more first relevancy selections comprise one or more true positives and one or more false positives.

14. The method of anyone of claims 9 to 12, further comprising selecting, at least in part by the similarity engine control unit, the one or more seed records.

15. The method of anyone of claims 9 to 14, further comprising automatically performing one or more maintenance operations on the one or more vehicles based, at least in part, on the one or more first relevancy selections.
